# EUROPÄISCHE PATENTSCHRIFT

(11) **EP 3 917 707 B1**
(45) Veröffentlichungstag und Bekanntmachung des Hinweises auf die Patenterteilung: **11.02.2026**
(21) Anmeldenummer: 19845576.8
(22) Anmeldetag: 16.12.2019
(51) Int. Cl.: B23B 5/12, B23Q 1/76, B23Q 17/00, B23Q 17/22

(54) **VERFAHREN ZUM ANSTELLEN EINER EINLAUFFÜHRUNG EINER SCHÄLMASCHINE UND SCHÄLMASCHINE**
METHOD FOR ADJUSTING AN INLET GUIDE OF A PEELING MACHINE AND PEELING MACHINE
PROCÉDÉ POUR LA MISE EN MARCHE D'UN GUIDAGE D'ENTRÉE D'UNE MACHINE À ÉCROUTER ET MACHINE À ÉCROUTER

(30) Priorität: 31.01.2019 DE 102019102523; 19.09.2019 DE 102019125248
(43) Veröffentlichungstag der Anmeldung: 08.12.2021
(73) Patentinhaber: SMS group GmbH, 41069 Mönchengladbach (DE)
(72) Erfinder: BARTZ, Alfred, 41069 Mönchengladbach (DE); LINDBÜCHL, Jörg, 41069 Mönchengladbach (DE)
(74) Vertreter: Hemmerich & Kollegen
(86) Internationale Anmeldenummer: PCT/DE2019/101090
(87) Internationale Veröffentlichungsnummer: WO 2020/156604

(56) Entgegenhaltungen:
- EP-A2- 2 420 350
- DE-A1- 102009 041 340
- DE-A1- 3 223 232
- DE-A1- 4 122 948
- DE-B- 1 167 154
- US-A- 4 005 624
- US-A- 5 303 621

## Beschreibung

Die Erfindung betrifft ein Verfahren zum Anstellen einer Einlaufführung einer Schälmaschine, bei welchem mittels der Einlaufführung ein Schälgut in Bezug auf einen Schälwerkzeuge tragenden Schälkopf geführt wird. Auch betrifft die Erfindung eine Schälmaschine umfassend einen Einlassbereich mit einer Einlaufführung, einen Schälwerkzeuge tragenden Schälkopf und einen Auslassbereich, wobei die Einlaufführung wenigstens zwei Führungsrollen mittels jeweils wenigstens eines Rollenträgers trägt, wobei wenigstens einer der Rollenträger über wenigstens ein Führungsrollenstellglied anstellbar ist.

Bekannte Schälmaschinen haben einen um eine Drehachse bzw. um eine Bearbeitungsachse rotierenden Schälkopf, der eine Anstelleinrichtung für mit dem Schälkopf umlaufende Werkzeughalter aufweist. Mittels der Anstelleinrichtung werden diese Werkzeughalter mit den daran angeordneten Werkzeugen gegenüber einem Werkstück so eingestellt, dass die Werkzeuge beispielsweise eine Zunderschicht von einem warmgewalzten Material entfernen, sodass nach der Bearbeitung des Rundmaterials als Ergebnis ein metallisch blankes Rundmaterial vorliegt.

Eine derartige Schälmaschine ist beispielsweise in der DE 101 29 207 A1 beschrieben, in welcher eine zu einer Hohlwelle verlagerbare Anstelleinrichtung im Bereich eines Schälkopfes angeordnet ist. Je nach Verlagerung der Anstelleinrichtung werden Werkzeughalter bzw. daran angeordnete Werkzeuge radial zu einer Bearbeitungsachse bewegt. Hierdurch können die Werkzeuge individuell auf einen Durchmesser eines zu bearbeitenden Grundmaterials eingestellt werden.

Darüber hinaus ist aus der DE 195 03 772 A1 eine Maschine zum Schälen von Rohren und Stangen bekannt. Hierbei erfolgt das Schälen durch mehrere sich um ein Schälgut drehende Schälwerkzeuge, die jeweils an stabförmigen Werkzeugträgern angeordnet sind. Die Werkzeugträger sind gegenüber einer Längsachse des Schälgutes radial verschiebbar gelagert und stützen sich unter anderem gegen die Innenseite einer Konusbuchse ab.

In der EP 2 420 350 A2 ist eine Schälmaschine mit einem Vorschubapparat beschrieben, wobei der Vorschubapparat mit Einschubrollen zum Beschleunigen von Werkstücken, insbesondere von Stäben, Rohren, Stangen, Drähten, Kabeln oder ähnlichem ausgestattet ist, wobei die Einschubrollen jeweils mittels einer Einschubrollenwelle angetrieben sind und wobei wenigstens eine Einschubrollenwelle exzentrisch in einer Wellenaufnahme gelagert ist.

Schälmaschinen sind auch in der DE 41 22 948 A1, der US 5,303,621 und der DE 32 23 232 A1 offenbart. Hierbei ist lediglich die DE 41 22 948 A1 gattungsgemäß, während sich die DE 32 23 232 A1 und die US 5,303,621 mit einem Vorschubapparat und nicht mit einer Einlaufführung beschäftigen.

Schälgüter sind überwiegend geschmiedete metallische Halbzeuge, welche durch Druckumformen ausgeformt worden sind und welche eine im Wesentlichen in einer Längsrichtung verlaufende Erstreckungsrichtung aufweisen. Diesem Umformverfahren ist geschuldet, dass Schälgüter vergleichsweise grobe Toleranzen aufweisen. Insbesondere sind hiervon Oberflächentoleranzen und Geradheit des Schälgutes betroffen.

Abweichungen in der Geradheit des Schälgutes führen dazu, dass eine theoretische Mitte des Schälgutes in Längsrichtung des Schälgutes eine Krümmung aufweist.

Abweichungen in der Oberflächentoleranz des Schälgutes hingegen führen zu abweichenden Abständen zwischen der theoretischen Mitte des Schälgutes und der Oberfläche des Schälgutes.

Da diese beiden Abweichungen letztlich in ganz unterschiedlichen Ausprägungen auftreten, kann es zu erheblichen Schwankungen in der Materialverteilung des Schälgutes entlang der Längserstreckungsrichtung kommen.

Eine Schälmaschine wird eingesetzt, um aus dem Schälgut ein Blankgut bzw. Blankmaterial, insbesondere einen Blankstahl oder ein ähnliches Halbzeug bereitzustellen, welcher sich im Vergleich zu dem Schälgut durch geringe Oberflächenformtoleranzen und eine hervorragende Oberflächenqualität auszeichnet. Hierfür ist wesentlich, dass möglichst die gesamte Oberfläche des Schälgutes vollständig durch Abtragen eines Spans von der Schälmaschine bearbeitet wird.

Von der Maßhaltigkeit des Schälgutes ist abhängig, wie viel Volumen pro Längeneinheit des Schälgutes von der Schälmaschine abgetragen werden muss. Weist das Schälgut vergleichsweise hohe Abweichungen hinsichtlich seiner Geradheit und/oder seiner Oberflächentoleranzen auf, so muss ein vergleichsweise hohes Volumen pro Längeneinheit des Schälguts von der Schälmaschine abgetragen werden.

Im Stand der Technik bekannte Schälmaschinen weisen im Bereich ihres Schälkopfes eine Vorschubeinrichtung auf, welche einen Vorschubapparat und eine Einlaufführung umfasst. Während der Vorschubapparat dazu eingerichtet ist, ein Schälgut in seiner Längserstreckungsrichtung zu beschleunigen, ist die Einlaufführung dazu eingerichtet, das Schälgut in Bezug auf den Schälkopfes zu führen. Vielfach können derartige Vorschubapparate hinsichtlich einer gewünschten Vorschubgeschwindigkeit des Schälgutes sowie einer Führungsrichtung in der das Schälgut die Einlaufführung verlässt eingestellt werden.

Hierdurch kann durch manuellen Eingriff in die Verfahrensparameter der Schälmaschine bewirkt werden, dass das Schälgut zentrisch auf den Schälkopf zuläuft und der Schälmaschine ausreichend Zeit zur Verfügung gestellt wird, damit sie das zu zerspanende Volumen des Schälgutes innerhalb der Bearbeitungsgrenzen der Schälmaschine abtragen kann.

Insbesondere wenn das von der Schälmaschine abzuschälende also zu zerspanende Volumen des Schälgutes minimiert werden soll oder wenn die Formtoleranzen des Schälgutes stetig variierende Abweichungen aufweisen, entsteht nachteilig ein gesteigerter Aufwand für die Nachführung der Verfahrensparameter der Schälmaschine. Dieser führt zu einer gesteigerten Belastung des die Schälmaschine überwachenden Facharbeiters.

Es ist Aufgabe vorliegender Erfindung, ein Verfahren zum Anstellen einer Einlaufführung einer Schälmaschine und eine Schälmaschine bereitzustellen, welches trotz möglicher Ungenauigkeiten des zugeführten Schälgutes, wie beispielsweise Unrundheiten im Querschnitt oder Abweichungen über die Länge, eine möglichst hohe Qualität des geschälten Schälgutes ermöglicht.

Die Aufgabe der Erfindung wird durch Verfahren zum Anstellen einer Einlaufführung einer Schälmaschine und Schälmaschinen mit den Merkmalen der unabhängigen Ansprüche gelöst. Weitere, ggf. auch unabhängig hiervon, vorteilhafte Ausgestaltungen finden sich in den Unteransprüchen sowie der nachfolgenden Beschreibung.

Nach einem ersten Aspekt kann trotz möglicher Ungenauigkeiten des zugeführten Schälgutes eine möglichst hohe Qualität des geschälten Schälguts durch ein Verfahren zum Anstellen einer Einlaufführung einer Schälmaschine, bei welchem mittels der Einlaufführung ein Schälgut in Bezug auf einen Schälwerkzeuge tragenden Schälkopf geführt wird, ermöglicht werden, wenn die Einlaufführung derart in ihrer Wirkung auf das Schälgut geregelt wird, dass die theoretische Mitte des Schälgutes in Bezug auf den Schälkopf und/oder in Bezug auf die Einlaufführung über die Länge des Schälguts möglichst konstant bleibt.
Kumulativ bzw. alternativ hierzu kann nach einem zweiten Aspekt trotz möglicher Ungenauigkeiten des zugeführten Schälgutes eine möglichst hohe Qualität des geschälten Schälguts durch ein Verfahren zum Anstellen einer Einlaufführung einer Schälmaschine, bei welchem mittels der Einlaufführung ein Schälgut in Bezug auf einen Schälwerkzeuge tragenden Schälkopf geführt wird, ermöglicht werden, wenn etwaige Abweichungen des Schälgutes von seiner Sollführungslage gemessen und zur Regelung der Einlaufführung genutzt werden.

Unter einem "Schälgut" wird vorliegend ein Halbzeug aus Metall verstanden, welches eine sich im Wesentlichen in Längsrichtung erstreckende Erstreckungsrichtung aufweist und einem Schälvorgang unterzogen werden soll bzw. wird. Ein Schälgut ist überwiegend mit einem Druckumformverfahren, insbesondere einem Schmiedeverfahren, umgeformt worden und weist dadurch bedingt in der Regel vergleichsweise breite Toleranzfeldbreiten hinsichtlich der Oberflächentoleranzen und hinsichtlich der Geradheit der Längserstreckungsachse auf. Weiterhin weist ein metallisches Schälgut vielfach eine Zunderschicht auf der Oberfläche auf, insbesondere wenn es mit einem Warmumformungsverfahren ungeformt wurde. Auch letzteres kann bereits für sich genommen ein Grund sein, ein entsprechendes Gut als Schälgut einem Schälvorgang zu unterziehen.

Besonders häufige Schälgüter sind Stäbe, Rohre, Stangen, Drähte oder Kabel, insbesondere aber auch Blocke, Hohlblöcke und ähnliche Halbzeuge, die nach dem Schälen noch nachbearbeitet, beispielsweise in Scheiben aufgeteilt, werden sollen.

Ermittelt man die theoretische Mitte des Schälgutes in Abhängigkeit der Längserstreckungsrichtung, so ist eine Verbindungslinie der theoretischen Mittelpunkte für die Mehrheit der Schälgüter krummlinig.

Die Querschnittsform eines Schälgutes ist im Regelfall rund oder an eine runde Querschnittsform angenähert.

Unter einer "Schälmaschine" wird vorliegend eine Zerspanungsmaschine verstanden, die dem Schälgut eine bestimmte geometrische Form gibt, indem von dem Schälgut überschüssiges Material auf mechanischem Weg in Form von Spänen abgetrennt wird. Zielsetzung einer Schälmaschine ist es, aus dem Schälgut einen Blankgut, wie beispielsweise einen Blankstahl, bereitzustellen, welcher frei von einer etwaigen Zunderschicht ist und welcher sich im Vergleich zu dem noch nicht geschälten Schälgut durch geringe Oberflächenformtoleranzen und eine hervorragende Oberflächenqualität auszeichnet.

Der "Schälkopf" ist vorzugsweise hierbei ein Teil der Schälmaschine, welcher im Betrieb der Schälmaschine eine Rotationsbewegung ausführt, welcher ein oder mehrere Schälwerkzeuge trägt und/oder welcher den Durchmesser des Schälguts reduziert.

Ein "Schälwerkzeug" ist dann vorzugsweise dementsprechend ein Zerspanungswerkzeug, welches eine Schneide aufweist. Beim Schälen oder allgemein beim Zerspanen dringt die Schneide des Schälwerkzeuges in das Schälgut ein und trennt Späne ab.

Unter einer "Einlaufführung" einer Schälmaschine wird dementsprechend vorliegend insbesondere der Teil einer Schälmaschine verstanden, welcher das Schälgut in Richtung des Schälkopfes führt. Eine Einlaufführung weist in der Regel zumindest eine Stellgröße auf, mit welcher die Ausrichtung des Schälgutes von der Einlaufführung zum Schälkopf beeinflusst werden kann.

Unter der jeweiligen "theoretischen Mitte des Schälgutes" wird vorzugsweise jeweils derjenige Punkt verstanden, der den Mittelpunkt des größtmöglichen Innenkreises eines infinitesimal dünnen Schälgutquerschnittes bildet.

Eine "Abweichungen des Schälgutes von seiner Sollführungslage" bezeichnet dann vorzugsweise den Abstand der theoretischen Mitte des Schälgutes von dem Mittelpunkt der Umlaufbahn einer Schneide eines Schälwerkzeuges auf dem Schälkopf.

Unter einer "Regelung" wird ein Verfahren verstanden, bei dem eine prinzipiell veränderliche Größe in der Regel automatisch konstant oder annähernd konstant gehalten wird. Eine Eigenschaft einer Regelung ist, dass der Wert einer konstant zu haltenden Größe als Istwert festgestellt und bei Abweichung vom gewollten Sollwert der Wert einer Stellgröße so verändert wird, dass sich der Wert der konstant zu haltenden Größe dem Sollwert wieder nähert. Eine geeignete Stellgröße kann insbesondere eine Stellgröße der Einlaufführung sein. Insbesondere sei bei einer Stellgröße der Einlaufführung an die Längsausdehnung eines Führungsrollenstellgliedes gedacht.

Eine Regelung kann von einem Menschen vorgenommen werden, indem er eine Abweichung zwischen Istwert und Sollwert erfasst und einen Wert einer Stellgröße an einem Stellglied verstellt.

Alternativ und vorzugsweise kann eine Regelung vollelektronisch vorgenommen werden, indem ein Istwert mittels einer Messeinrichtung erfasst wird, dieser mittels einer Datenverarbeitungs- und -auswerteeinheit bzw. elektronisch oder elektrisch mit dem Sollwert verglichen und eine etwaige Abweichung in einen Wert einer Stellgröße umgewandelt wird, wobei der Wert für die Stellgröße an ein Stellglied weitergegeben wird und wobei das Stellglied dazu eingerichtet ist, die Stellgröße anhand einer elektronischen Wertvorgabe zu verstellen. In letztgenanntem Fall muss das Stellglied über einen Stelltrieb oder eine sonstige ansteuerbare Stelleinrichtung verfügen.

Der Stand der Technik sah bislang vor, dass ein Facharbeiter eine Schälmaschine überwacht hat und er bei Bedarf die Einlaufführung derart verstellt hat, dass sich ein subjektiv empfunden besseres Schälergebnis ergeben hat. Insbesondere waren solche Eingriffe durch den Facharbeiter notwendig, wenn das herzustellende Blankgut Mängel an der Oberflächenbeschaffenheit aufgewiesen hat. Insbesondere sei daran gedacht, dass das bereitzustellende Blankgut stellenweise noch Zunder an seiner Oberfläche aufgewiesen hat.

Weiterhin sah der Stand der Technik vor, dass der Facharbeiter eine Verstellung an der Einlaufführung vorgenommen hat, wenn das zu zerspanende Volumen auf dem Umfang des Schälgutes ungleichmäßig verteilt war.

Mit anderen Worten kann sich der Facharbeiter im Stand der Technik bei der Einstellung der Schälmaschine nur an qualitativen Informationen zur Lage des Schälgutes orientieren.

Im Stand der Technik hat der Facharbeiter im laufenden Betrieb der Schälmaschine insbesondere also gerade keine Möglichkeit eine Abweichung zwischen der theoretischen Mitte des Schälgutes in Bezug auf den Schälkopf oder eine Abweichung des Schälgutes von seiner Sollführungslage quantitativ zu erfassen.

Schälgüter deren Verbindungslinie der theoretischen Mittelpunkte krummlinig ist erfordern einen gesteigerten Aufwand für die Regelung der Führungslage des Schälgutes zum Anstellen der Einlaufführung der Schälmaschine.

Abweichend wird vorliegend insbesondere ein Verfahren zum Anstellen der Einlaufführung einer Schälmaschine vorgeschlagen, bei dem der Bediener der Schälmaschine zusätzlich eine quantitative Information über die Abweichung zwischen der theoretischen Mitte des Schälgutes in Bezug auf den Schälkopf, also in Bezug auf den Mittelpunkt der Umlaufbahn einer Schneide eines Schälwerkzeuges auf dem Schälkopf, oder über eine Abweichung des Schälgutes von seiner Sollführungslage, insbesondere visuell, zugänglich gemacht bekommt und er somit im laufenden Betrieb der Schälmaschine seine von ihm durchgeführte Regelung durch diese Information gestützt ist.

Vorteilhaft kann durch die hier vorgestellten Aspekte erreicht werden, dass die Regelgüte bei der Anstellung der Einlaufführung unerwartet stark verbessert werden kann.

Insbesondere kann erreicht werden, dass Fehlstellen an dem herzustellenden Blankgut nahezu vollständig vermieden werden können. Bei Fehlstellen sei insbesondere an eine Oberflächenunebenheit gedacht, beispielsweise an einen Oberflächenabschnitt, welcher von der zerspanenden Bearbeitung nicht erfasst worden ist.

In der Folge einer besseren Regelgüte kann vorteilhaft erreicht werden, dass der beim Umformverfahren für das Schälgut aufgeschlagene Materialzuschlag gegenüber dem später für das Blankgut betriebssicher zu erreichenden Maß verkleinert werden kann. In der Konsequenz können das von der Schälmaschine zu zerspanende Volumen reduziert und der Schälprozess beschleunigt bzw. die Materialverluste minimiert werden, wodurch die Prozesskette zur Herstellung eines Blankstahles insgesamt effizienter und wirtschaftlicher wird.

Weiterhin ist vorteilhaft denkbar, dass der benötigte Ausbildungsstand des Maschinenbedieners sinken kann, der an einer entsprechenden Schälmaschine das hier vorgeschlagene Verfahren ausführen soll, wodurch etwaige personelle Engpässe einfacher umgangen bzw. Personalkosten gesenkt werden können.

Bei dem erfindungsgemäßen Verfahren werden für die Regelung eine zwischen der Einlaufführung und dem Schälgut auftretende Kraft oder zwischen der Einlaufführung und dem Schälgut auftretende Kräfte gemessen.

Konkret sei hier daran gedacht, dass die zu bestimmende Kraft oder die zu bestimmenden Kräfte mit einem Kraftsensor bestimmt werden, welcher zumindest mittelbar in einer Wirkverbindung mit einer Führungsrolle der Schälmaschine, insbesondere deren Einlaufführung, steht.

Weiterhin sei konkret daran gedacht, dass ein Zusammenhang zwischen einer gemessenen Kraft oder mehreren gemessenen Kräften und einer Abweichung zwischen der theoretischen Mitte des Schälgutes in Bezug auf den Schälkopf, also in Bezug auf den Mittelpunkt der Umlaufbahn einer Schneide eines Schälwerkzeuges auf dem Schälkopf, oder über eine Abweichung des Schälgutes von seiner Sollführungslage bestehen sollte, welche dazu genutzt werden kann, aus einer gemessenen Kraft bzw. aus gemessenen Kräften auf eine entsprechende Abweichung zu schließen bzw. diese Abweichung dann entsprechend durch eine Regelung möglichst konstant zu halten.

Vorteilhaft kann durch den hier vorgestellten Aspekt ein einfacher Messaufbau erreicht werden, mittels welchem eine quantitative Information über eine derartige Abweichung erreicht werden kann.

Insbesondere sind Kraftsensoren besonders robust, sodass ebenfalls eine hohe Verfügbarkeit einer Messeinrichtung vorteilhaft erreicht werden kann.

Nach einem dritten Aspekt der Erfindung kann trotz möglicher Ungenauigkeiten des zugeführten Schälgutes eine möglichst hohe Qualität des geschälten Schälgutes durch ein computergestütztes Verfahren zum Anstellen einer Einlaufführung einer Schälmaschine ermöglicht werden, bei welchem mittels der Einlaufführung ein Schälgut in Bezug auf einen Schälwerkzeuge tragenden Schälkopf geführt wird und die Schälmaschine eine Datenverarbeitungs- und -auswerteeinheit aufweist, die dazu eingerichtet ist, ein Verfahren nach den ersten beiden Aspekten computergestützt auszuführen.

Unter einer "Datenverarbeitungs- und -auswerteeinheit" wird vorliegend ein elektronisches Bauteil bzw. eine elektronische Einrichtung verstanden, welches zur Verarbeitung und Auswertung von Daten eingerichtet ist. Insbesondere kann eine Datenverarbeitungs- und -auswerteeinheit einen Prozessor aufweisen, welcher für die Datenverarbeitung eingerichtet ist. Eine Datenverarbeitungs- und -auswerteeinheit verfolgt in der Regel die Zielsetzung eines organisierten Umgangs mit Daten, wobei Informationen über gewonnene Daten gewonnen und Daten verändert werden können. Insbesondere kann eine Datenverarbeitungs- und -auswerteeinheit dazu eingerichtet sein, einen automatisierten Regelungsalgorithmus auszuführen und die berechneten Stellwerte an die entsprechenden Stellglieder weiterzugeben, sodass die Schälmaschine autonom mittels der Datenverarbeitungs- und -auswerteeinheit geregelt werden kann.

Konkret wird dementsprechend somit insbesondere ein computergestütztes Verfahren zum Anstellen einer Einlaufführung einer Schälmaschine vorgeschlagen. Im direkten Vergleich zu den ersten beiden Aspekte und dem dritten Aspekt benötigt dann die Schälmaschine zur Ausführung des computergestützten Verfahrens entsprechend vorzugsweise eine Datenverarbeitungs- und -auswerteeinheit, welche zur autonomen Durchführung des computergestützten Anstellverfahrens sowie zur Weitergabe berechneter Stellwerte an entsprechenden Stellglieder der Schälmaschine eingerichtet ist.

Vorteilhaft kann durch den hier vorgestellten Aspekt erreicht werden, dass eine mit dem computergestützten Anstellverfahren versehene Schälmaschine autonom oder wenigstens teilautonom geregelt werden kann, wodurch Personalaufwendungen für den Betrieb einer entsprechenden Schälmaschine reduziert werden können.

Es sei ausdrücklich darauf hingewiesen, dass der Gegenstand des dritten Aspekts mit den ersten beiden Aspekten vorteilhaft kombinierbar ist, und zwar sowohl einzeln oder in beliebiger Kombination kumulativ.

Nach einem vierten Aspekt kann eine Schälmaschine umfassend einen Einlassbereich mit einer Einlaufführung, einen Schälwerkzeuge tragenden Schälkopf und eine Auslassbereich, wobei die Einlaufführung wenigstens zwei Führungsrollen mittels jeweils wenigstens eines Rollenträgers trägt, wobei wenigstens einer der Rollenträger über wenigstens ein Führungsrollenstellglied anstellbar ist, trotz möglicher Ungenauigkeiten des zugeführten Schälgutes eine möglichst hohe Qualität des geschälten Schälgutes ermöglichen, wenn die Schälmaschine eine Messeinrichtung zur Ermittlung einer Abweichung des Schälgutes von seiner Sollführungslage umfasst.

Der "Einlassbereich" einer Schälmaschine ist in vorliegendem Zusammenhang vorzugsweise derjenige Bereich einer Schälmaschine, in dem das Schälgut in Kontakt mit der Schälmaschine gebracht wird.

Der "Auslassbereich" einer Schälmaschine ist in vorliegendem Zusammenhang dann vorzugsweise derjenige Bereich, an dem der Blankstahl aus der Schälmaschine ausläuft.

Unter einer "Führungsrolle" wird in vorliegendem Zusammenhang insbesondere eine mechanische Rolle verstanden, welche zur Führung des Schälgutes eingerichtet ist. Insbesondere kann das Schälgut über die Führungsrolle abrollen und hinsichtlich seiner Laufrichtung beeinflusst werden.

Als "Rollenträger" wird insbesondere dasjenige Teil bzw., Bauteil einer Schälmaschine bezeichnet, welches als Auflager für eine Führungsrolle dient und folglich die Führungsrolle mit der Schälmaschine verbindet.

Unter einem "Führungsrollenstellglied" wird in vorliegendem Zusammenhang insbesondere jeglicher Aktor verstanden, welcher dazu eingerichtet ist, den Abstand zwischen der Führungsrolle und dem Mittelpunkt der Umlaufbahn einer Schneide eines Schälwerkzeuges auf dem Schälkopf zu variieren, indem vorzugsweise die Längsausdehnung des Führungsrollenstellgliedes verstellt werden kann. Die Längsausdehnung des Führungsrollenstellgliedes ist dann eine Stellgröße der Einlaufführung einer Schälmaschine. Durch Variation dieser Stellgröße kann die theoretische Mitte des Schälgutes in Bezug auf den Mittelpunkt der Umlaufbahn einer Schneide eines Schälwerkzeuges auf dem Schälkopf variiert werden.

Insbesondere sei bei einer Stellgröße der Einlaufführung dementsprechend an die Längsausdehnung eines Führungsrollenstellgliedes gedacht.

Eine "Messeinrichtung" bezeichnet in vorliegendem Zusammenhang vorzugsweise eine Vorrichtung zum Messen einer physikalischen Größe. Insbesondere sei bei einer Messeinrichtung an eine Vorrichtung gedacht, mittels welcher zumindest mittelbar die Abweichung des Schälgutes von seiner Sollführungslage bestimmt werden kann. Unmittelbar kann die Messeinrichtung dazu eingerichtet sein, die Längsausdehnung des Führungsrollenstellgliedes zu bestimmen. Als Besonderheit kann die Messeinrichtung hier ebenfalls dazu eingerichtet sein, den Sollwert für die Längsausdehnung des Führungsrollenstellgliedes an das Führungsrollenstellglied weiterzugeben. Ebenso ist es denkbar, dass die Messeinrichtung eine Kraft oder Kräfte misst, die als entsprechend Maß, beispielsweise für die Abweichung des Schälguts von seiner Sollführungslage oder ähnliches angesehen werden können. Außerdem kann die Messeinrichtung zur Ausgabe der Abweichung des Schälgutes von seiner Sollführungslage an eine Visualisierung eingerichtet sein, sodass die Abweichung des Schälgutes von seiner Sollführungslage von der Visualisierung angezeigt werden kann.

Der Stand der Technik sah bislang vor, dass ein Facharbeiter die Regelung einer Schälmaschine anhand der unmittelbar für ihn sichtbaren Abweichungen vorgenommen hat. Dazu gehörten Mängel an der Oberflächenbeschaffenheit des herzustellenden Blankstahls und ein ungleichmäßig auf dem Umfang des Schälguts verteiltes zu zerspanendes Volumen. Mit anderen Worten standen dem Facharbeiter lediglich qualitativen Informationen zur Lage des Schälgutes zur Regelung der Schälmaschine zur Verfügung.

Abweichend wird hier vorgeschlagen, dem Bediener der Schälmaschine über die Messeinrichtung eine quantitative Information über die Abweichung des Schälgutes von seiner Sollführungslage zugänglich zu machen.

Vorteilhaft kann durch den hier vorgestellten Aspekt erreicht werden, dass der Bediener der Schälmaschine eine genauere Information über die Abweichung des Schälgutes von seiner Sollführungslage erhält, sodass vorgenommene manuelle Regeleingriffe ebenfalls mit einer höheren Präzision ausgeführt werden können.

Bevorzugt ist die Messeinrichtung mit dem Führungsrollenstellglied wechselwirkend verbunden. In diesem Zusammenhang wird unter "wechselwirkenden Verbindung" insbesondere verstanden, dass das Führungsrollenstellglied und die Messeinrichtung mittels einer Datenleitung oder über eine sonstige Signalverbindung verbunden sind, wobei die Messeinrichtung dazu eingerichtet ist, den Sollwert für die Längsausdehnung des Führungsrollenstellgliedes an das Führungsrollenstellglied weiterzugeben und/oder den Istwert für die Längsausdehnung des Führungsrollenstellgliedes von dem Führungsrollenstellglied auszulesen. Vorteilhaft kann hierdurch erreicht werden, dass die Schälmaschine unmittelbar von der Messeinrichtung angesteuert bzw. die Etablierung eines entsprechenden Regelkreises ermöglicht werden kann.

In einer besonders bevorzugten Ausführungsform ist die Messeinrichtung an dem über das Führungsrollenstellglied anstellbaren Rollenträger und/oder an der von diesem getragenen Führungsrolle angeordnet. Vorteilhaft ermöglicht diese eine unmittelbare Messung an einem lokalen Angriffspunkt der Einlaufführung an dem jeweiligen Schälgut ermöglicht werden kann. Insbesondere kann in Kombination mit einer wechselwirkenden Verbindung zwischen der Messeinrichtung und dem Führungsrollenstellglied vorteilhaft erreicht werden, dass eine genaue Ansteuerung an einer einzelnen Führungsrolle ermöglicht wird. Eine entsprechende Regelung kann somit feiner abgestimmt werden.

Bei der erfindungsgemäßen Schälmaschine umfasst die Messeinrichtung einen Kraftsensor. Unter einem "Kraftsensor" wird dementsprechend jeder Sensor verstanden, welcher zur Bestimmung der physikalischen Größe einer Kraft eingerichtet ist. Ein Kraftsensor ermöglicht eine einfache und präzise Messung einer physikalischen Größe, die als proportional zu der Abweichung des Schälgutes von der Sollführungslage angesehen werden kann, insbesondere wenn die Einlaufführung eine Federung umfasst, da dort Kräfte einfach und präzise gemessen werden können.

Bevorzugt trägt die Einlaufführung drei, vier, fünf oder sieben Führungsrollen, die jeweils von der Einlaufführung mittels eines Rollenträgers getragen sind, wobei jeder der Rollenträger über wenigstens ein Führungsrollenstellglied anstellbar ist. Dieses ermöglicht eine entsprechend präzisere Führung. Ggf. können die Rollenträger auch mehr als eine Führungsrolle, also beispielsweise zwei, drei oder vier Führungsrollen, tragen, wobei auch in diesen Fällen insbesondere drei, vier, fünf oder sieben Rollenträger vorgesehen sein können. Statt der Führungsrollen können auch Führungslineale vorgesehen sein, die dann von entsprechenden Trägern, also von vorzugsweise drei, vier, fünf oder sieben Trägern, getragen werden können.

Vorzugsweise ist jedes der Führungsrollenstellglieder jeweils mit einer Messeinrichtung wechselwirkend verbunden, so dass entsprechend eine präzise und gute allseitige Messung und auch Einzelregelung der Führungsrollen möglich ist.

Wenn jede Messeinrichtung an dem zu dem entsprechenden Führungsrollenstellglied zugehörigen Rollenträger und/oder an der von diesem getragenen Führungsrolle angeordnet ist, kann eine genaue Messung jeder der Führungsrollen gewährleistet werden.

Bevorzugt ist die Schälmaschine dazu eingerichtet, ein Verfahren nach dem Verfahrensanspruch 1 auszuführen.

Die Vorteile eines Verfahrens oder eines computergestützten Verfahrens zum Anstellen einer Einlaufführung einer Schälmaschine, bei welchem mittels der Einlaufführung ein Schälgut in Bezug auf einen Schälwerkzeuge tragenden Schälkopf geführt wird, lassen sich, wie vorstehend beschrieben, unmittelbar auf eine Schälmaschine umfassend einen Einlassbereich mit einer Einlaufführung, einen Schälwerkzeuge tragenden Schälkopf und eine Auslassbereich, wobei die Einlaufführung wenigstens zwei Führungsrollen mittels jeweils wenigstens eines Rollenträgers trägt, wobei wenigstens einer der Rollenträger über wenigstens ein Führungsrollenstellglied anstellbar ist, wobei die Schälmaschine eine Messeinrichtung zur Ermittlung einer Abweichung des Schälgutes von seiner Sollführungslage umfasst, erstrecken.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: schematisch eine Schälmaschine im Bereich eines Schälkopfes und einer Vorschubeinrichtung mit einem Vorschubapparat und einer Einlaufführung;
- Figur 2: die Schälmaschine aus der vorhergehenden Figur 1, bei welcher sowohl der Vorschubapparat von der Einlaufführung als auch die Einlaufführung von dem Schälmaschinengetriebe getrennt sind;
- Figur 3: schematisch eine Ansicht der Einlaufführung mit Keilspannelementen in Transportrichtung eines Schälgutes; und
- Figur 4: schematisch eine Ansicht einer alternativen Einlaufführung mit Keilspannelementen in Transportrichtung eines Schälgutes.

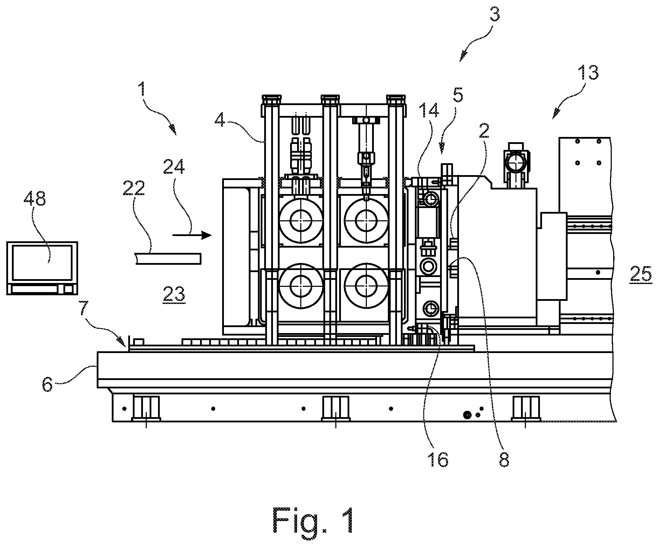

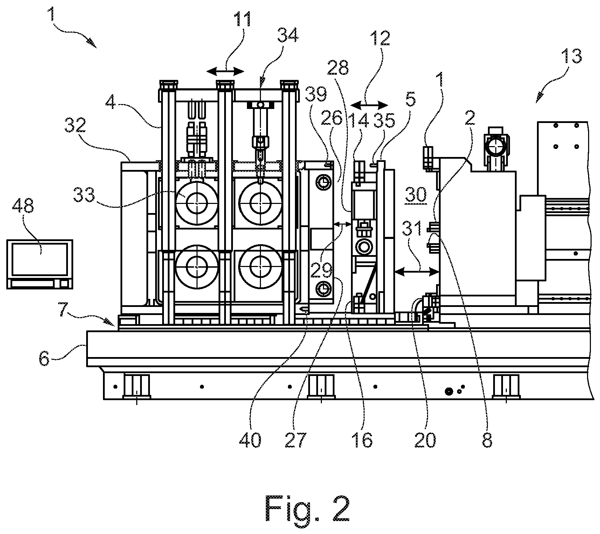

Die in den Figuren 1 und 2 gezeigte Schälmaschine 1 weist im Bereich ihres Schälkopfes 2 mit seinen Schälwerkzeugen 8 eine Vorschubeinrichtung 3 auf.

Um letztlich dann eine Schälvorgang durchführen zu können, können der Schälkopf 2 und mithin auch die Schälwerkzeuge 8 rotieren.

Die in den Figuren 1 und 2 dargestellte Vorschubeinrichtung 3 weist ihrerseits einen Vorschubapparat 4 und eine Einlaufführung 5 auf.

Der Vorschubapparat 4 und die Einlaufführung 5 sind auf einer Traverse 6 der Schälmaschine 1 verlagerbar angeordnet, wobei die Traverse 6 eine Linearführung 7 für den Vorschubapparat 4 und die Einlaufführung 5 bildet. Sowohl der Vorschubapparat 4 als auch die Einlaufführung 5 können in beiden Richtungen der Pfeile 11 und 12 entlang der Linearführung 7 bewegt werden. Somit kann zum einen der Vorschubapparat 4 und die Einlaufführung 5 einzeln von einem Schälmaschinengetriebe 13 der Schälmaschine 1 wegbewegt bzw. zu dem Schälmaschinengetriebe 13 der Schälmaschine 1 hinbewegt werden. Zum anderen können der Vorschubapparat 4 und die Einlaufführung 5 relativ zueinander bewegt werden. Dies bedeutet, dass der Vorschubapparat 4 auch unabhängig von der Einlaufführung 5 und umgekehrt auf der Traverse 6 bewegt werden kann. Es versteht sich, dass in abweichenden Ausführungsformen hier auch eine andere Anordnung von Vorschubapparat 4 und Einlaufführung 5 gewählt werden kann.

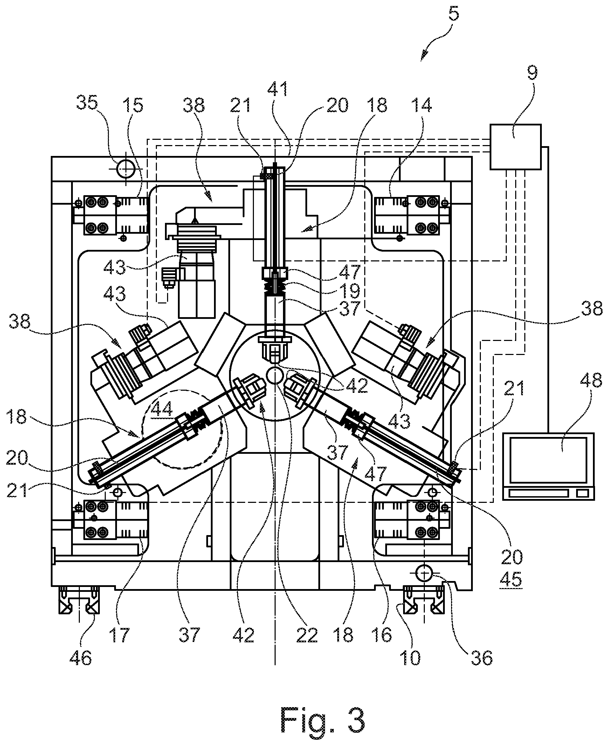

In dem in der Figur 1 illustrierten Betriebszustand der Schälmaschine 1 ist der Vorschubapparat 4 und die Einlaufführung 5 zu einer kompakten Vorschubeinrichtung 3 miteinander verbunden, und die Vorschubeinrichtung 3 ist darüber hinaus mit der Einlaufführung 5 an das Schälmaschinengetriebe 13 der Schälmaschine 1 verbunden. Damit sowohl der Vorschubapparat 4 als auch die Einlaufführung 5, insbesondere im hier dargestellten Betriebszustand, zuverlässig mit dem Schälmaschinengetriebe 13 verbunden werden können, ist zum einen der Vorschubapparat 4 und die Einlaufführung 5 mittels erster oberer Keilspannelemente 14 und 15 sowie mittels erster unterer Keilspannelemente 16 und 17 (siehe auch Figur 3) fest aber lösbar miteinander verklemmt. Zum anderen ist die Einlaufführung 5 und das Schälmaschinengetriebe 13 mittels zweiter oberer Keilspannelemente (hier nicht explizit dargestellt) sowie mittels zweiter unterer Keilspannelemente (hier nicht explizit dargestellt) fest aber lösbar miteinander verklemmt.

In diesem verspannten Zustand kann ein Schälgut 22 mittels des Vorschubapparates 4 über die Einlaufführung 5 präzise an den Schälkopf 2 der Schälmaschine 1 und mithin an die rotierenden Schälwerkzeuge geführt werden. Das Schälgut 22 wird hierzu mittels der Vorschubeinrichtung 3 in Transportrichtung 24 von einem Einlassbereich 23 durch die Schälmaschine 1 kontinuierlich zu einem Auslassbereich 25 geführt.

Der Vorschubapparat 4 ist in der Anordnung nach Figur 2 derart von der Einlaufführung 5 entfernt verlagert worden, dass zwischen dem Vorschubapparat 4 und der Einlaufführung 5 ein Montageraum 26 entsteht, der sowohl eine gute Zugänglichkeit an dem einlaufführungsseitigen Ende 27 des Vorschubapparates 4 sowie an dem vorschubapparatseitigen Ende 28 der Einlaufführung 5 ermöglicht. Um den Montageraum 26 zu realisieren, ist der Vorschubapparat 4 mit dem Abstand 29 von der Einlaufführung 5 beabstandet.

Darüber hinaus sind bei der Anordnung nach Figur 2 der Vorschubapparat 4 und die Einlaufführung 5 derart weit von dem Schälmaschinengetriebe 13 der Schälmaschine 1 verlagert worden, dass zwischen der Einlaufführung 5 und dem Schälmaschinengetriebe 13 ein weiterer Montageraum 30 bereitgestellt ist. Die Einlaufführung 5 ist dementsprechend um einen Abstand 31 von dem Schälmaschinengetriebe 13 entfernt.

Es versteht sich, dass die Einlaufführung 5 und der Vorschubapparat 4 nicht zwingend bei jedem Ausführungsbeispiel lösbar und gegeneinander verlagerbar ausgebildet sein müssen. Insbesondere können diese beispielsweise auch fest beabstandet oder sonst wie angeordnet sein, so lange ein Vorschub einerseits und eine Führung andererseits sichergestellt werden kann.

Der Vorschubapparat 4 weist bei vorliegenden Ausführungsbeispielen einen verwindungssteifen Rahmen 32 auf, in welchem neben den Einlaufrollen 33 (hier nur exemplarisch beziffert) ebenfalls eine Antriebs- und Verstellmechanik 34 der Einlaufrollen 33 angeordnet ist.

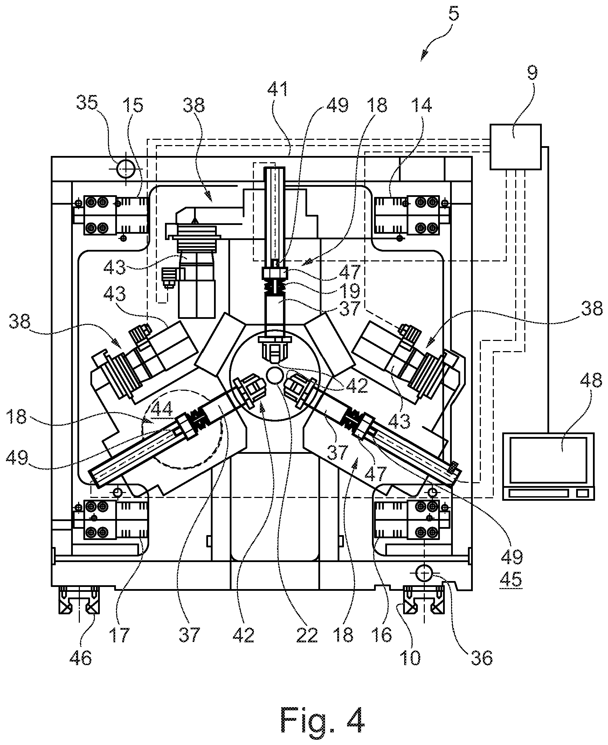

Darüber hinaus weist die Einlaufführung 5 in diesen Ausführungsbeispielen einen ersten Arretierbolzen 35 und einen zweiten Arretierbolzen 36 (siehe hierzu Figuren 3 und 4) auf.

Das Schälmaschinengetriebe 13 weist bei diesem Ausführungsbeispiel ebenfalls einen ersten und einen zweiten Arretierbolzen (hier nicht explizit dargestellt) auf.

Der erste Arretierbolzen 35 der Zulaufführung 5 wirkt im Betriebszustand (siehe Figur 1) der Schälmaschine 1 mit einer komplementären Arretierhülse 39 und der zweite Arretierbolzen 36 wirkt im Betriebszustand dementsprechend mit einer komplementären Arretierhülse 40 zusammen. Die Arretierbolzen 35 und 36 sorgen dafür, dass der Rahmen 32 des Vorschubapparates 4 und ein verwindungssteifer Kasten 41 (siehe Figuren 3 und 4) der Einlaufführung 5 geführt aufeinander zu bewegt werden. Darüber hinaus werden der verwindungssteife Rahmen 32 und der verwindungssteife Kasten 41 durch die Arretierbolzen 35 und 36 zusätzlich zu der Linearführung 7 verdrehsicher zueinander gelagert. Durch die Arretierbolzen 35 und 36 hält die gesamte Vorschubeinrichtung 3 wesentlich robuster und verwindungssteifer zusammen. Es versteht sich, dass in abweichenden Ausführungsbeispielen die Verwindungssteifigkeit auch auf andere Weise sichergestellt bzw. in ausreichendem Maß gewährleistet werden kann.

Gleiches gilt auch hinsichtlich der Arretierbolzen des Schälmaschinengetriebes 13. Diese wirken mit entsprechenden Arretierhülsen (hier nicht explizit dargestellt) zusammen, die an der Einlaufführung 5 vorgesehen sind. Die Wirkverbindung sei vorliegend nur beispielhaft zwischen dem Vorschubapparat 4 und der Einlaufführung 5 ausführlich beschrieben. Je nach konkreter Ausgestaltung kann eine ausreichende Führung und Fixierung der vorstehend beschriebenen Baugruppen untereinander bereits mit lediglich zwei Arretierbolzen und entsprechenden komplementären Arretierhülsen erreicht werden. Es versteht sich, dass bei weiteren Ausführungsbeispielen jedoch auch mehr als zwei Arretierbolzen und Arretierhülsen Verwendung finden können.

In diesem Ausführungsbeispiel weist die Einlaufführung 5 zusätzlich noch Arretierbolzen 35 und 36 auf, die den Vorschubapparat 4 und die Einlaufführung 5 unabhängig von den Keilspannelementen 14, 15, 16 und 17 miteinander vorfixieren.

Im unteren Bereich 45 des verwindungssteifen Kastens 41 der Einlaufführung 5 sind ein erster Laufschuh 10 und ein zweiter Laufschuh 46 angeordnet. Über die beiden Laufschuhe 10 und 46 ist die Einlaufführung 5 mit der Linearführung 7 der Schälmaschine 1 translatorisch verlagerbar verbunden.

In dem verwindungssteifen Kasten 41 der Einlaufführung 5 sind bei diesem Ausführungsbeispiel drei sternförmig zueinander angeordnete Führungsrollen 42 vorgesehen. Jede dieser Führungsrollen 42 ist vorteilhafter Weise von einem Rollenträger 37 getragen, der seinerseits einzeln mittels eines Führungsrollenstellglied 38, welches bei diesem Ausführungsbeispiel einen Stellmotor 43 und ein entsprechendes Stellmotorgetriebe 44 umfasst, ansteuerbar, so dass das zu schälende Schälgut 22 dem Schälkopf 2 (siehe Figur 1) bzw. den Schälwerkzeugen 8 mit einer äußerst hohen Präzision zugeführt werden kann.

Hierbei ist die Verbindung zwischen dem Führungsrollenstellglied 38, bzw. bei diesem Ausführungsbeispiel dem Stellmotorgetriebe 44, und der jeweiligen Führungsrolle 42 über ein Tellerfederpaket 19 gefedert, so dass Unrundheiten oder sonstige lokale Abweichungen in dem Schälgut 22 ausgeglichen werden können.

Das Tellerfederpaket 19 liegt einerseits an dem Rollenträger 37 und andererseits an einem Stellfuß 47 an, der seinerseits von dem jeweiligen Stellmotorgetriebe 44 in Richtung auf das Schälgut 22 bzw. von diesem weg anstellbar ist.

Mittels eines Messdübels 20 kann bei dem in Figur 3 dargestellten Ausführungsbeispiel über einen Positionsmesser 21 die Relativposition zwischen dem jeweiligen Rollenträger 37 einerseits und dem Stellfuß 47 andererseits gemessen werden, was wegen der Federkonstanten des Tellerfederpakets 19 ein direktes Maß für die Kraft darstellt, die zwischen dem Rollenträger 37 bzw. der Führungsrolle 42 und dem Stellfuß 47 bzw. dem Stellmotorgetriebe 44 und der Einlaufführung 5 wirkt. Dementsprechend wird durch diese Anordnung ein Kraftsensor 18 bereitgestellt, der eine zwischen der Einlaufführung 5 und dem Schälgut 22 auftretende Kraft bzw. der gemeinsam mit den übrigen Kraftsensoren 18 die zwischen der Einlaufführung 5 und dem Schälgut 22 auftretende Kräfte messen kann.

Ein wenig abweichend hiervon baut das Ausführungsbeispiel nach Figur 4, bei welchem der Kraftsensor 18 durch eine Kraftaufnehmer 49 umgesetzt ist, der in dem Stellfuß 47 angeordnet ist und unmittelbar auf den Stellfuß 47 wirkende Kräfte messen und dann ausgeben kann.

Die Kraftsensoren 18 sind mithin Bestandteil einer Messeinrichtung 9 zur Ermittlung einer Abweichung des Schälgutes von seiner Sollführungslage, da derartige Abweichungen unmittelbar in einer Veränderung der Kraft bzw. Kräfte resultieren.

Die Messergebnisse der Messeinrichtung 9 werden dann genutzt, um die Stellmotoren 43 entsprechend anzusteuern. Je nach konkreter Umsetzung können die Messergebnisse eines jeweiligen Kraftsensors 18 direkt dazu genutzt werden, den Stellmotor 43, der auf den Rollenträger 37 wirkt, mit welchem der jeweilige Kraftsensor 18 unmittelbar wirkverbunden ist, anzusteuern. Auch ist es in anderen Umsetzungen möglich, die Messergebnisse aller Kraftsensoren 18 zu nutzen, um aus deren Kombination miteinander die Stellmotoren 43 ansteuernde Signale zu ermitteln, wobei auch beide Möglichkeiten kombiniert bzw. ggf. noch weitere Messergebnisse ergänzend genutzt werden können.

Bei vorliegendem Ausführungsbeispiel werden die gemessenen Kräfte in einer Visualisierung 48 angezeigt.

Das Maß, mit welchem die einzelnen Führungsrollenstellglieder 38 angesteuert werden, erfolgt vorliegend in einem die Kraftsensoren 18 umfassenden Regelkreis. Bei vorliegendem Ausführungsbeispiel erfolgt die Ansteuerung über eine Impulszustellung, wobei die Schrittweite der Impulsverstellung bei diesem Ausführungsbeispiel über die Visualisierung anwählbar ist. Es versteht sich, dass in abweichenden Ausführungsformen auf eine Anwählbarkeit der Schrittweite verzichtet werden oder eine andere Art der Ansteuerung gewählt werden können.

### Bezugszeichenliste:

- 1: Schälmaschine
- 2: Schälkopf
- 3: Vorschubeinrichtung
- 4: Vorschubapparat
- 5: Einlaufführung
- 6: Traverse
- 7: Linearführung
- 8: Schälwerkzeug
- 9: Messeinrichtung
- 10: erster Laufschuh
- 11: Pfeil
- 12: Pfeil
- 13: Schälmaschinengetriebe
- 14: Keilspannelemente
- 15: Keilspannelemente
- 16: Keilspannelemente
- 17: Keilspannelemente
- 18: Kraftsensor
- 19: Tellerfederpaket (exemplarisch beziffert)
- 20: Messdübel
- 21: Positionsmesser
- 22: Schälgut
- 23: Einlassbereich
- 24: Transportrichtung
- 25: Auslassbereich
- 26: Montageraum
- 27: einlaufführungsseitiges Ende
- 28: vorschubapparatseitiges Ende
- 29: Abstand
- 30: Montageraum
- 31: Abstand
- 32: Rahmen
- 33: Einlaufrollen
- 34: Antriebs- und Verstellmechanik
- 35: Arretierbolzen
- 36: Arretierbolzen
- 37: Rollenträger
- 38: Führungsrollenstellglied
- 39: Arretierhülse
- 40: Arretierhülse
- 41: Kasten
- 42: Führungsrolle (hier nur exemplarisch beziffert)
- 43: Stellmotor (hier nur exemplarisch beziffert)
- 44: Stellmotorgetriebe (exemplarisch beziffert)
- 45: unterer Bereich
- 46: zweiter Laufschuh
- 47: Stellfuß
- 48: Visualisierung
- 49: Kraftaufnehmer

Die Erfindung betrifft ein Verfahren zum Anstellen einer Einlaufführung einer Schälmaschine, bei welchem mittels der Einlaufführung ein Schälgut in Bezug auf einen Schälwerkzeuge tragenden Schälkopf derart geregelt wird, dass das von der Schälmaschine zu zerspanende Volumen pro Längeneinheit des Schälgutes bei der Herstellung eines Blankstahls mit hervorragender Oberflächenqualität minimiert wird.

Weiterhin betrifft die Erfindung eine Schälmaschine, welche entsprechende Messmittel bereitstellt, um das vorstehend beschriebene Verfahren ausführen zu können.

## Patentansprüche

1. Verfahren zum Anstellen einer Einlaufführung (5) einer Schälmaschine (1), bei welchem mittels der Einlaufführung (5) ein Schälgut (22) in Bezug auf einen Schälwerkzeuge (8) tragenden Schälkopf (2) geführt wird, **dadurch gekennzeichnet, dass** die Einlaufführung (5) derart in ihrer Wirkung auf das Schälgut (22) geregelt wird, dass die theoretische Mitte des Schälgutes (22) in Bezug auf den Schälkopf (2) und/oder in Bezug auf die Einlaufführung (5) über die Länge des Schälguts (22) möglichst konstant bleibt, wobei für die Regelung eine zwischen der Einlaufführung (5) und dem Schälgut (22) auftretende Kraft oder zwischen der Einlaufführung (5) und dem Schälgut (22) auftretende Kräfte gemessen werden.

2. Anstellverfahren nach Anspruch 1, bei welchem die Schälmaschine (1) eine Datenverarbeitungs- und -auswerteeinheit aufweist, welche dazu eingerichtet ist, das Verfahren computergestützt auszuführen.

3. Schälmaschine (1) umfassend einen Einlassbereich (23) mit einer Einlaufführung (5), einen Schälwerkzeuge (8) tragenden Schälkopf (2) und eine Auslassbereich (25), wobei die Einlaufführung (5) wenigstens zwei Führungsrollen (42) mittels jeweils wenigstens eines Rollenträgers (37) trägt, wobei wenigstens einer der Rollenträger (37) über wenigstens ein Führungsrollenstellglied (38) anstellbar ist, **dadurch gekennzeichnet, dass** die Schälmaschine (1) eine Messeinrichtung (9) zur Ermittlung einer Abweichung des Schälgutes (22) von seiner Sollführungslage umfasst, wobei die Messeinrichtung (9) mit dem Führungsrollenstellglied (38) wechselwirkend verbunden ist, wobei die Messeinrichtung (9) einen Kraftsensor (18) umfasst.

4. Schälmaschine (1) nach Anspruch 3, **dadurch gekennzeichnet, dass** die Messeinrichtung (9) an dem über das Führungsrollenstellglied (38) anstellbaren Rollenträger (37) und/oder an der von diesem getragenen Führungsrolle (42) angeordnet ist.

5. Schälmaschine (1) nach Anspruch 3 oder 4 **dadurch gekennzeichnet, dass** die Einlaufführung (5) drei, vier, fünf oder sieben Führungsrollen (42) trägt, die jeweils von der Einlaufführung mittels eines Rollenträgers (37) getragen sind, wobei jeder der Rollenträger (37) über wenigstens ein Führungsrollenstellglied (38) anstellbar ist, die vorzugsweise jeweils mit einer Messeinrichtung (9) wechselwirkend verbunden sind, wobei vorzugsweise jede Messeinrichtung (9) an dem zu dem entsprechenden Führungsrollenstellglied (38) zugehörigen Rollenträger (37) und/oder an der von diesem getragenen Führungsrolle (42) angeordnet ist.

6. Schälmaschine (1) nach einem der Ansprüche 3 bis 5, **dadurch gekennzeichnet, dass** die Schälmaschine (1) dazu eingerichtet ist, ein Verfahren nach einem der Ansprüche 1 bis 3 auszuführen.

## Claims

1. Method of adjusting an inlet guide (5) of a scalping machine (1), in which a scalping material (22) is guided by means of the inlet guide (5) with respect to a scalping head (2) carrying scalping tools (8), **characterised in that** the inlet guide (5) is regulated in its action on the scalping material (22) in such a way that the theoretical centre of the scalping material (22) with respect to the scalping head (2) and/or with respect to the inlet guide (5) remains as constant as possible over the length of the scalping material (22), wherein a force arising between the inlet guide (5) and the scalping material (22) or forces arising between the inlet guide (5) and the scalping material (22) is or are measured for the regulation.

2. Adjusting method according to claim 1, in which the scalping machine (1) comprises a data processing and evaluating unit configured for the purpose of computerassisted performance of the method.

3. Scalping machine (1) comprising an inlet region (23) with an inlet guide (5), a scalping head (2) carrying scalping tools (8), and an outlet region (25), wherein the inlet guide (5) carries at least two guide rollers (42) in each instance by means of at least one roller carrier (37), wherein at least one of the roller carriers (37) is adjustable by way of at least one guide roller setting element (38), **characterised in that** the scalping machine (1) comprises a measuring device (9) for determining a deviation of the scalping material (22) from a target guide position, wherein the measuring device (9) is interactively connected with the guide roller setting element (38), wherein the measuring device (9) comprises a force sensor.

4. Scalping machine (1) according to claim 3, **characterised in that** the measuring device (9) is arranged at the roller carrier (37) adjustable by way of the guide roller setting element (38) and/or at the guide roller (42) carried by this.

5. Scalping machine (1) according to claim 3 or 4, **characterised in that** the inlet guide (5) carries, three, four, five or seven guide rollers (42), which are each carried by the inlet guide by means of a roller carrier (37), wherein each of the roller carriers (37) is adjustable by way of at least one guide roller setting element (38), the guide roller setting elements preferably each being interactively connected with a measuring device (9), wherein preferably each measuring device (9) is arranged at the roller carrier (37) belonging to the corresponding guide roller setting element (38) and/or at the guide roller (42) carried by this.

6. Scalping machine (1) according to any one of claims 3 to 5, **characterised in that** the scalping machine (1) is configured for the purpose of performing a method according to any one of claims 1 to 3.

## Revendications

1. Procédé d'ajustement d'un guidage d'entrée (5) d'une écorceuse (1), dans lequel, au moyen du guidage d'entrée (5), un produit à écorcer (22) est guidé par rapport à une tête d'écorçage (2) portant des outils d'écorçage (8), **caractérisé en ce que** le guidage d'entrée (5) est régulé dans son action sur le produit à écorcer (22) de telle sorte que le centre théorique du produit à écorcer (22) par rapport à la tête d'écorçage (2) et/ou par rapport au guidage d'entrée (5) reste aussi constant que possible sur la longueur du produit à écorcer (22), une force survenant entre le guidage d'entrée (5) et le produit à écorcer (22) ou des forces survenant entre le guidage d'entrée (5) et le produit à écorcer (22) étant mesurées pour la régulation.

2. Procédé d'ajustement selon la revendication 1, dans lequel l'écorceuse (1) présente une unité de traitement et d'évaluation de données, laquelle est conçue pour exécuter le procédé de manière assistée par ordinateur.

3. Écorceuse (1) comprenant une zone d'entrée (23) avec un guidage d'entrée (5), une tête d'écorçage (2) portant des outils d'écorçage (8) et une zone de sortie (25), le guidage d'entrée (5) portant au moins deux galets de guidage (42) au moyen respectivement d'au moins un support de galet (37), au moins l'un des supports de galet (37) pouvant être ajusté par l'intermédiaire d'au moins un actionneur de galet de guidage (38), **caractérisée en ce que** l'écorceuse (1) comprend un dispositif de mesure (9) pour la détermination d'un écart du produit à écorcer (22) par rapport à sa position de guidage de consigne, le dispositif de mesure (9) étant relié réciproquement à l'actionneur de galet de guidage (38), le dispositif de mesure (9) comprenant un capteur de force (18).

4. Écorceuse (1) selon la revendication 3, **caractérisée en ce que** le dispositif de mesure (9) est disposé sur le support de galet (37) ajustable par l'intermédiaire de l'actionneur de galet de guidage (38) et/ou sur le galet de guidage (42) porté par celui-ci.

5. Écorceuse (1) selon la revendication 3 ou 4, **caractérisée en ce que** le guidage d'entrée (5) porte trois, quatre, cinq ou sept galets de guidage (42) qui sont respectivement portés par le guidage d'entrée au moyen d'un support de galet (37), chacun des supports de galet (37) pouvant être ajusté par l'intermédiaire d'au moins un actionneur de galet de guidage (38), lesquels sont de préférence reliés réciproquement respectivement à un dispositif de mesure (9), chaque dispositif de mesure (9) étant de préférence disposé sur le support de galet (37) associé à l'actionneur de galet de guidage (38) correspondant et/ou sur le galet de guidage (42) porté par celui-ci.

6. Écorceuse (1) selon l'une des revendications 3 à 5, **caractérisée en ce que** l'écorceuse (1) est conçue pour exécuter un procédé selon l'une des revendications 1 à 3.
